# EUROPÄISCHE PATENTSCHRIFT

(11) **EP 2 371 337 B1**
(45) Veröffentlichungstag und Bekanntmachung des Hinweises auf die Patenterteilung: **10.10.2012**
(21) Anmeldenummer: 11158939.6
(22) Anmeldetag: 21.03.2011
(51) Int. Cl.: A61G 7/08, B60B 33/06

(54) **Lenkrolle**
Guide roll
Galet de direction

(30) Priorität: 26.03.2010 DE 102010016155
(43) Veröffentlichungstag der Anmeldung: 05.10.2011
(73) Patentinhaber: Tente GmbH & Co. KG, 42929 Wermelskirchen (DE)
(72) Erfinder:
(74) Vertreter: Müller, Enno

(56) Entgegenhaltungen:
- EP-A1- 1 021 972
- DE-A1- 4 321 739
- DE-U1-202004 018 384

## Beschreibung

Die Erfindung betrifft eine Lenkrolle mit einem Rollenkörper, einem Schwenklager und einem mittels eines Elektromotors ausfahrbaren Standfuß, wobei der Standfuß ein teleskopierbares Fußteil aufweist.

Derartige Lenkrollen sind bereits in verschiedener Ausgestaltung bekannt geworden. Es wird auf die DE 43 21 739 A1 verwiesen.

Bei der bekannten Lenkrolle ist die Teleskopierbarkeit über mehrfach ineinander geführte, gegeneinander schraubverbundene Ausfahrteile erreicht. Der Aufbau ist damit konstruktiv aufwändig.

Ausgehend von dem genannten Stand der Technik beschäftigt sich die Erfindung mit der Aufgabenstellung, eine Lenkrolle mit einem elektromotorisch ausfahrbarem Standfuß anzugeben, die einen günstigen Aufbau aufweist.

Eine erste mögliche Lösung dieser Aufgabe ist mit dem Gegenstand des Anspruches 1 angegeben. Hierbei ist darauf abgestellt, dass der Elektromotor unterhalb des Schwenklagers, zumindest unterhalb eines oberen, ersten Schwenklagers, angeordnet ist.

Erfindungsgemäß ist erkannt worden, dass in dem Rollenkörper, bei geeigneter Ausbildung, ein Elektromotor unterhalb des Schwenklagers angeordnet sein kann. Zwar ist eine an die Abmaße des Elektromotors angepasste, entsprechend große Ausnehmung in dem Gehäuse erforderlich. Dies wird aber aufgewogen durch den kürzeren Weg zu dem Fußteil. Es ist möglich, mit konstruktiv geringerem Aufwand die Teleskopierbarkeit des Fußteils zu erreichen.

Bevorzugt ist vorgesehen, dass der Elektromotor mit einem vertikal unterhalb des Elektromotors angeordneten Getriebe zusammenwirkt. Erst das Getriebe wirkt dann auf das eigentliche Teleskopteil, bevorzugt mittels eines weiteren Teils, ein. Die Untereinanderanordnung von Elektromotor und Getriebe, beide entsprechend unterhalb des, zumindest von oben gesehen ersten, Schwenklagers, füllt den Raum einer diesbezüglichen Aufnahme in dem Rollenkörper, die bevorzugt eine vertikale zylindrische Aufnahme ist, bereits zu einem großen Teil aus. Das Getriebe ist hierbei entsprechend dem Elektromotor äußerlich auch als zylindrischer Körper ausgebildet. Die Vertikalachse des zylindrischen Körpers ist entsprechend der Vertikalachse der Aufnahme ausgerichtet.

Weiter ist bevorzugt, dass das Getriebe eine axial feststehende Gewindehülse - zunächst -, als weiteres Teil, antreibt. Zwischen dem Getriebe und der hierdurch unmittelbar angetriebenen Gewindehülse findet entsprechend keine Teleskopierung statt.

Statt dessen ist weiter bevorzugt vorgesehen, dass die Gewindehülse innerhalb des vertikal beweglichen Fußteils angeordnet ist und das Fußteil vertikal bewegt. Nämlich vertikal auffährt oder abfährt. Das Fußteil bewegt sich entsprechend teleskopierend zu der Gewindehülse. Hierfür kann zwischen der Gewindehülse und dem Fußteil ein Gewindeeingriff vorgesehen sein. Entsprechend weist die Gewindehülse ein Außengewinde auf und das Fußteil, das auch hülsenartig gestaltet ist, ein diesbezügliches Innengewinde.

Das Fußteil selbst ist weiter bevorzugt drehgesichert. Es kann sich damit nur in vertikaler Richtung bewegen. Die Drehsicherung kann beispielsweise relativ zu dem feststehenden Gewinde vorgenommen sein. Dies etwa mittels eines in dem Bereich des Gewindes ein- und ausfahrenden vertikal stehenden Zapfens.

Weiter ist bevorzugt eine Richtungsfeststellung vorgesehen. Die Richtungsfeststellung kann durch einen mit einer Hülse, in welcher der Elektromotor befestigt ist, relativ zu dem feststehenden Gehäuse der Rolle drehbaren Nockenteil erreicht sein. Das Nockenteil ist hierzu elastisch in seine Anschlagstellung vorgespannt.

Weiter ist auch bevorzugt, dass das Schwenklager im Einzelnen aus zwei vertikal beabstandeten Lagern besteht. In diesem Zusammenhang ist darüber hinaus bevorzugt, dass der Elektromotor unterhalb des zweiten Lagers, also des Schwenklagers insgesamt, angeordnet ist.

Der Elektromotor ist weiter bevorzugt in einem Hülsenkörper aufgenommen, der seinerseits in einem Aufnahmeraum des Rollenkörpers relativ zu dem Aufnahmeraum drehbeweglich angeordnet ist. Der Hülsenkörper ist darüber hinaus, gegebenenfalls vermittels eines zweiten Teiles, mit einer Montageplatte fest verbunden. Durch eine feste Verbindung mit der Montageplatte ist der Elektromotor - und auch in der Folge das Getriebe - drehfest mit der Montageplatte verbunden. Kabeldurchführungen werden so bei einem Verschwenken der Rolle nicht beeinträchtigt.

Nachstehend ist die Erfindung des Weiteren anhand der beigefügten Zeichnung, die jedoch lediglich ein Ausführungsbeispiel darstellt, erläutert. Hierbei zeigt:
- Fig. 1: eine perspektivische Ansicht der Lenkrolle von schräg unten;
- Fig. 2: eine Ansicht von unten der LenkrOolle gemäß Fig. 1;
- Fig. 3: einen Querschnitt durch den Gegenstand gemäß Fig. 1 bzw. Fig. 2, geschnitten entlang der Ebene III-III in Fig. 2;
- Fig. 4: eine Herausvergrößerung aus der Darstellung gemäß Fig. 2, wobei sich das Fußteil in der angehobenen Stellung befindet;
- Fig. 5: eine Darstellung gemäß Fig. 4, jedoch mit abgesenkten Fußteil;
- Fig. 6: eine Darstellung gemäß Fig. 5, bei weiter ausgefahrenem Fußteil und somit angehobener Rolle;

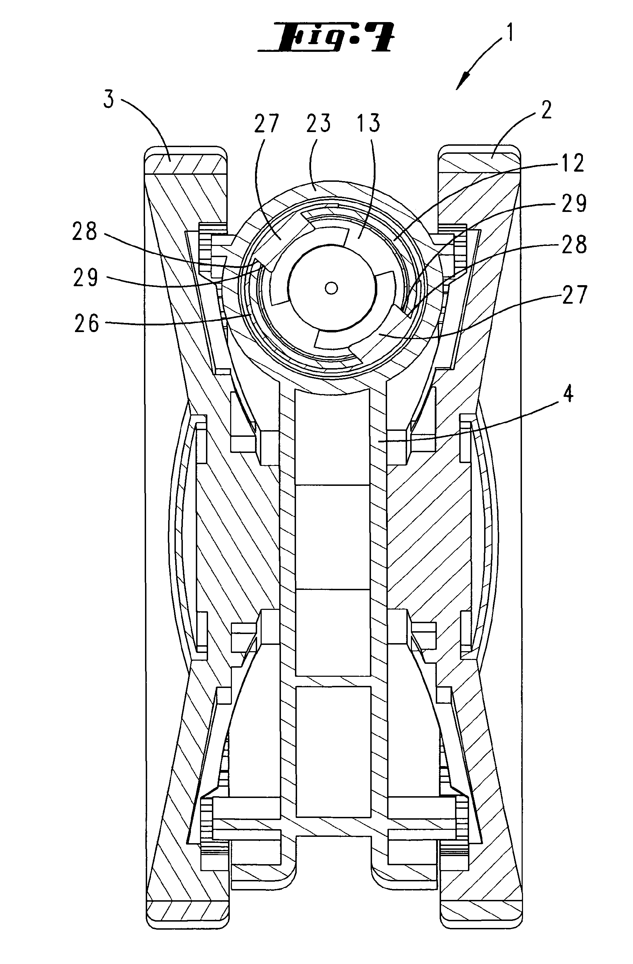

- Fig. 7: einen Querschnitt durch den Gegenstand gemäß Fig. 3, geschnitten entlang der Linie VII-VII;
- Fig. 8: eine Explosionsdarstellung der Rolle gemäß Fig. 1.

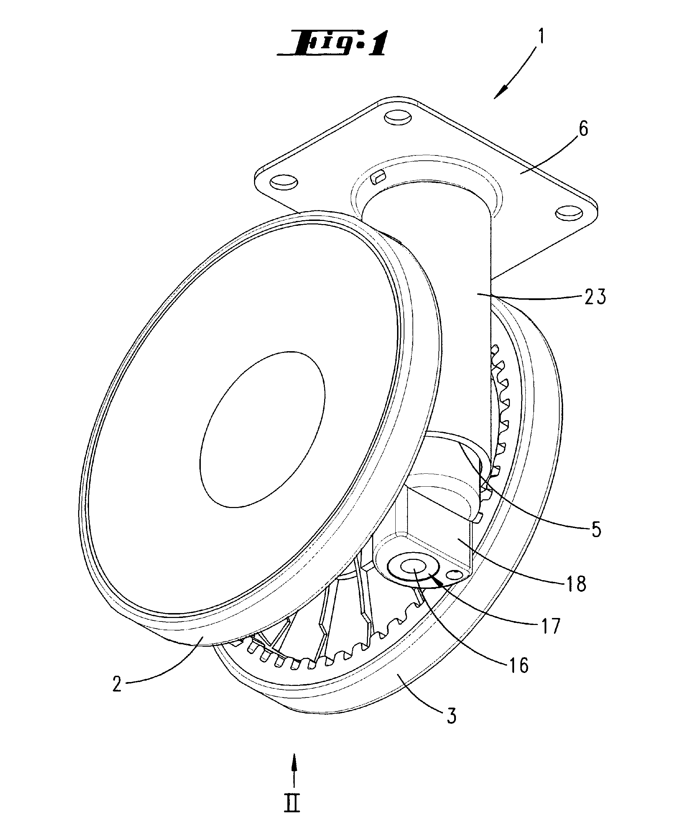

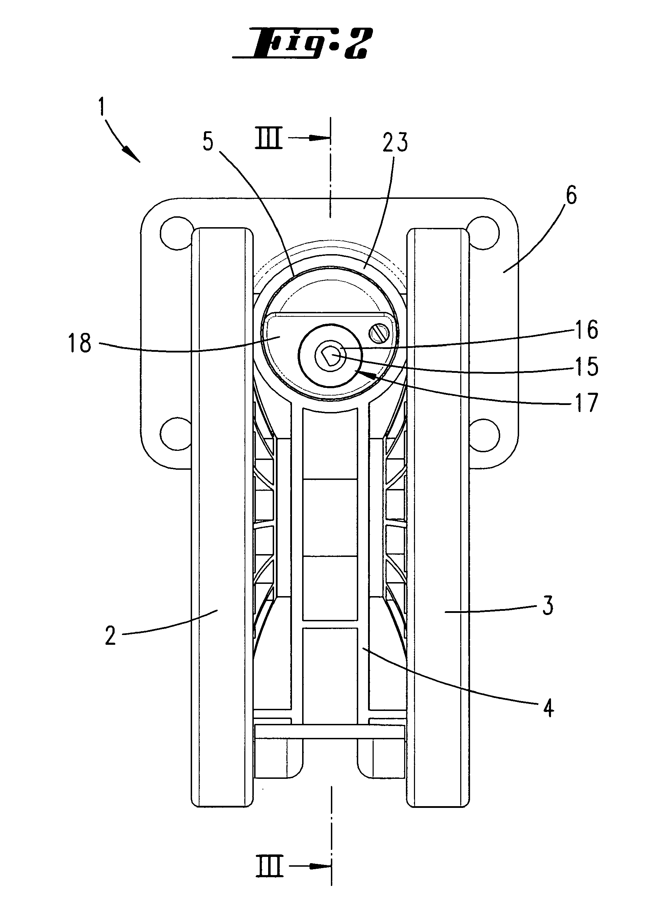

Dargestellt und beschrieben ist, zunächst mit Bezug zu den Fig. 1 bis 3 eine Lenkrolle 1, die als Doppelrolle ausgebildet ist. Es sind zwei Räder 2, 3 vorgesehen, die über ein Gehäuse 4 miteinander verbunden sind. In dem Gehäuse 4 ist ein Aufnahmeraum 5, der beim Ausführungsbeispiel zylindrisch ist, ausgebildet. In dem Aufnahmeraum 5 ist ein Elektromotor und das Getriebe sowie ein ausfahrbares Fußteil gehaltert. Der Aufnahmeraum 5 ist vertikal ausgerichtet und befindet sich beim Ausführungsbeispiel zwischen den beiden Rädern.

Oberseitig ist eine Montageplatte 6 vorgesehen, mit Hilfe welcher die Rolle 1 beispielsweise an einem Krankenhausbett oder einem sonstigen Gerät, wie beispielsweise einen medizinischen Vorratsschrank oder dgl. angebracht sein kann.

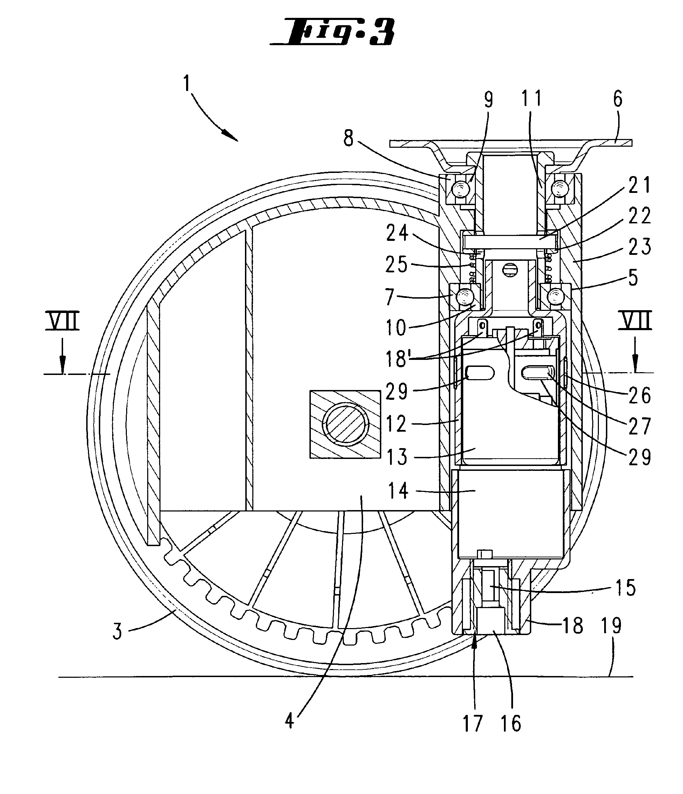

Wie der Schnittdarstellung der Fig. 3 zu entnehmen ist, ist in dem Aufnahmeraum 5 zunächst, vertikal oben, ein Schwenklager angeordnet, das aus zwei axial zueinander distanzierten Lagern 7, 8 besteht. Diese Lager 7, 8 sind beim Ausführungsbeispiel als Kugellager ausgebildet. Innen bezüglich der inneren Lagerringe 9, 10 der Lager 7, 8 erstreckt sich eine Befestigungshülse 11, die oberseitig, bevorzugt drehfest, mit der Montageplatte 6 verbunden ist. Die Befestigungshülse 11 ist auch bevorzugt drehfest mit den inneren Lagerringen (gegebenenfalls: dem einen inneren Lagerring) des Schwenklagers verbunden. Mit der Befestigungshülse 11 ist weiter eine, beim Ausführungsbeispiel teilweise in diese hineinragend ausgebildet, ansonsten aber vertikal unterhalb angeordnete Aufnahmehülse 12 verbunden. Die Verbindung schließt an die Befestigungshülse 11 Die Aufnahmehülse 12 weist in ihrem sich unter dem in die Befestigungshülse 11 hineinragend ausgebildeten Abschnitt bevorzugt einen größeren Durchmesser auf als die Befestigungshülse 11. Somit ist der erforderliche größte Durchmesser des Aufnahmeraumes noch weiter nach unten verlagert. In der Aufnahmehülse 12 ist ein Elektromotor 13 angeordnet. An dem Elektromotor 13 ist unterseitig ein Getriebe 14 angeflanscht.

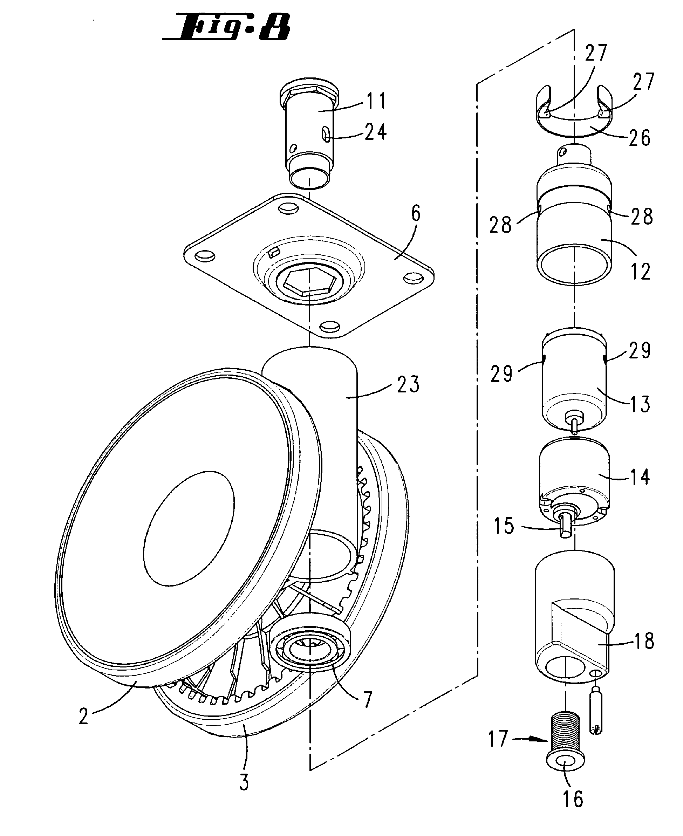

Das Getriebe 14, vgl. hierzu im Einzelnen etwa Fig. 8, weist eine nach unten herausragende Antriebswelle 15 auf, die formschlüssig in eine Aufnahmeöffnung 16 der weiter unterseitig des Getriebes 14 angeordneten Gewindehülse 17 eingreift. Die Antriebswelle 15 verläuft vertikal.

Der Elektromotor weist darüber hinaus noch oberseitig Elektroanschlüsse 18 auf, von denen, durchgeführt durch die Befestigungshülse 11, Anschlussdrähte zu beispielsweise einem in dem Krankenhausbett oder dgl., an dem die Rolle 1 angebracht ist, befindlichen Akkumulator verlaufen. In dem Krankenhausbett oder dgl. kann auch eine Steuerung vorgesehen sein, mittels welcher auf den Elektromotor eingewirkt werden kann.

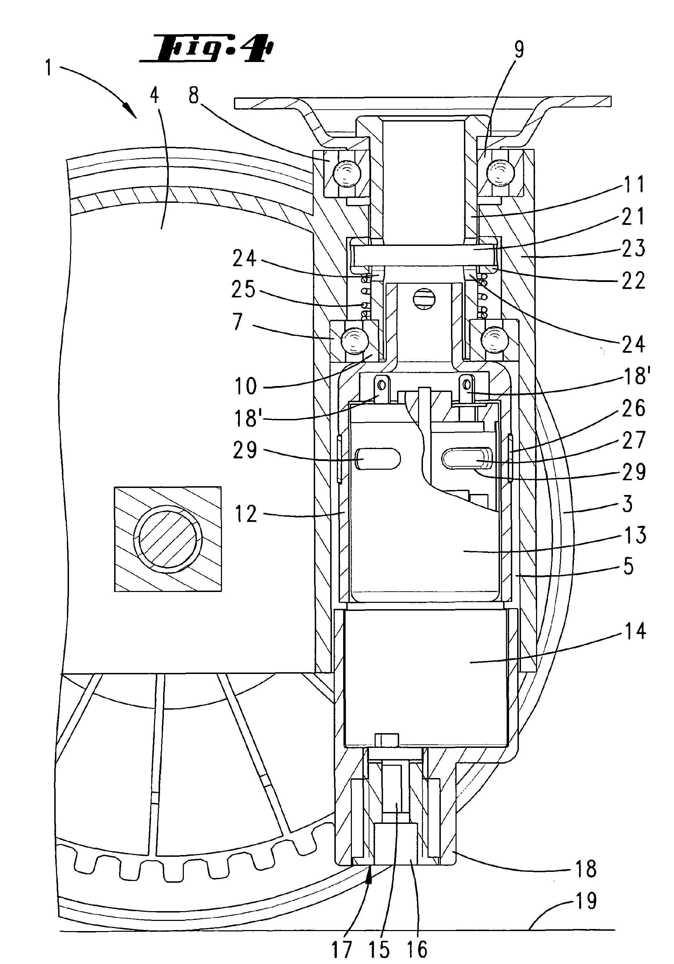

Mit der Drehhülse 17 wirkt das hiermit im Gewindeeingriff stehende Fußteil 18 zusammen, das entsprechend auch hülsenartig ausgebildet ist und im hochgefahrenen Zustand gemäß Fig. 3 bzw. Fig. 4 das Getriebe 14 außen umgreift.

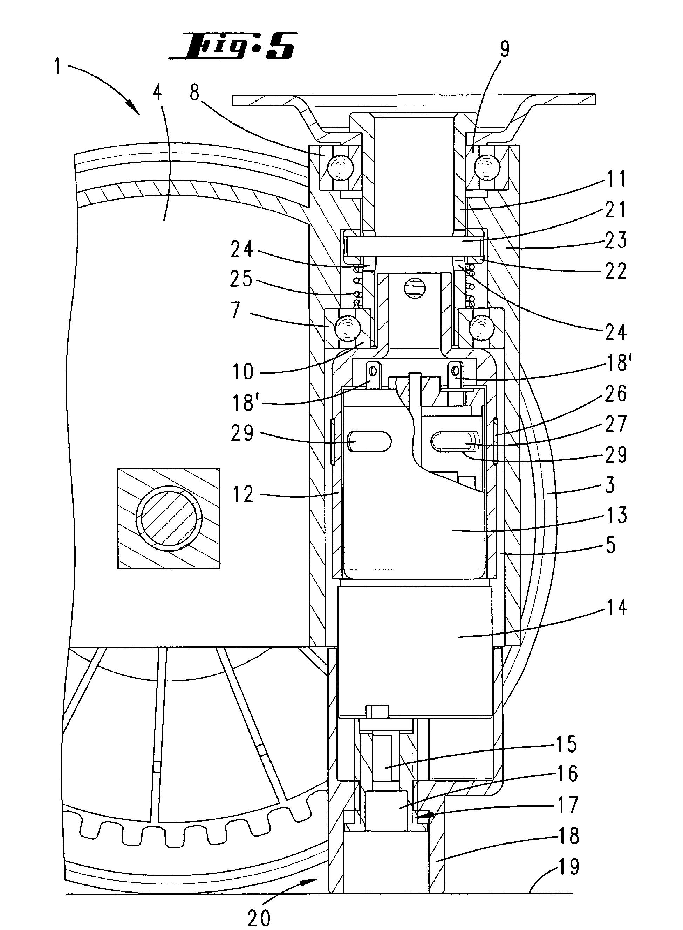

Die Ausgangsstellung vor Betätigung des Elektromotors zur Festsetzung der Rolle ist in Fig. 4 dargestellt. Wird nun der Elektromotor zum Ausfahren des Aufsetzfußes 18 betätigt, fährt der Aufsetzfuß 18 zunächst bis in Anlage an einen Boden 19, vgl. Fig. 5.

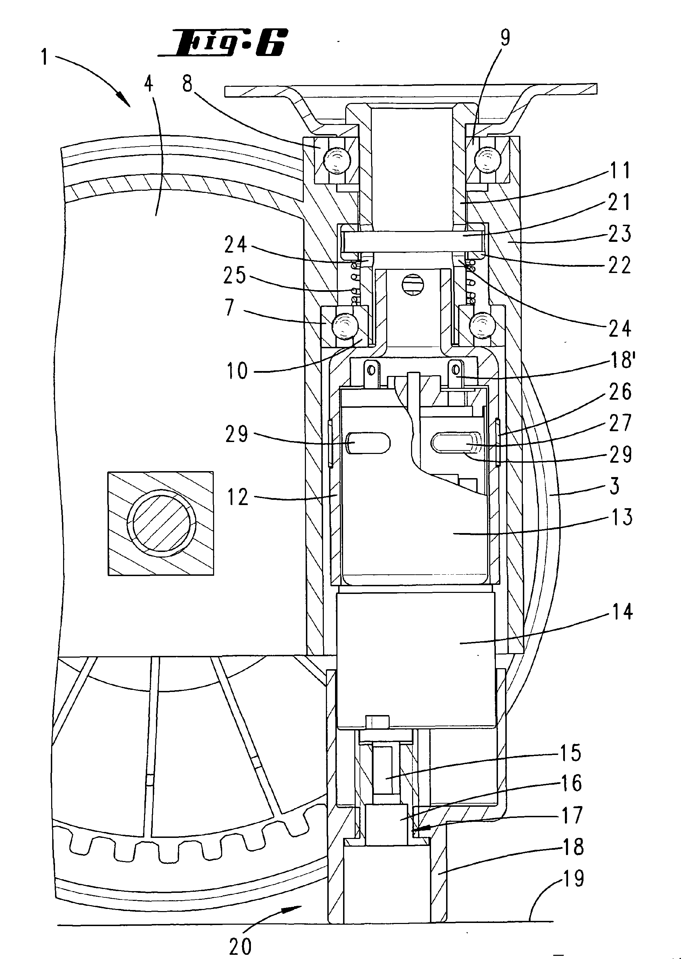

Die Schaltung des Elektromotors ist aber weiterhin so ausgelegt, dass im Falle, dass keine weitere Betätigung erfolgt, der Elektromotor den Aufsetzfuß weiter von dem Gehäuse abstemmt, so dass es zu einem Anheben der Rolle gemäß Fig. 6 kommen kann. Allerdings ist die Schaltung weiter bevorzugt so vorgesehen, dass der Antrieb des Elektromotors abgebrochen wird, wenn ein bestimmter Motorstrom überschritten wird. Je nachdem, welches Gewicht auf der Rolle lastet, kann es daher auch dazu kommen, dass die Rolle nicht angehoben wird, sondern gegebenenfalls nur entlastet wird.

Der Aufsetzfuß 18 weist einen gegenüber dem Durchmesser des Elektromotors bzw. des mit praktisch gleichem Durchmesser vorgesehenen Getriebes durchmesserverringerten Aufsetzbereich 20 auf. Damit geht eine etwas höhere Flächenpressung einher, die eine erhöhte Standsicherheit erbringt. Zudem kann Hindernissen günstiger ausgewichen werden. Im Einzelnen, vgl. etwa Fig. 1, entspricht die Grundfläche des Aufsetzbereiches eine einseitig sekantenartig abgetrennten Kreisfläche.

Die Richtungsfeststellung ist vermittels der Befestigungshülse 11 erreicht. Wie insbesondere den Fig. 4 bis 6 zu entnehmen ist, ist die Befestigungshülse 11 von einem diese quer durchsetzenden Formschlussteil21 durchsetzt. Das Formschlussteil 21 weist hier eine zylindrische Gestaltung, in Form eines Bolzens, auf. Das Formschlussteil 21 ist bevorzugt außenseitig der Befestigungshülse 11 mit Eingriffsringen 22 versehen. Diese können beispielsweise aufgeschrumpft oder angeschweißt sein. Die Eingriffsringe 22 wirken mit einer im Einzelnen nicht dargestellten zugeordneten Eingriffsausnehmung in dem den Aufnahmeraum bildenden Aufnahmekörper 23 zusammen. Weiter ist in der Befestigungshülse 11 ein in Vertikalrichtung sich erstreckendes Langloch 24 ausgebildet, in dem das Teil 21 aufgenommen ist. Das Teil 21 ist weiter mittels einer Druckfeder 25 gegen den zugeordneten Anschlagbereich des Aufnahmekörpers 23 vorgespannt.

Bei normalem Betrieb liegt das Teil 21 in den Eingriffsausformungen des Aufnahmekörpers 23 ein. Die Lenkrolle ist dann entsprechend einer Bockrolle festgesetzt. Erfolgt jedoch eine Kraftbeaufschlagung, die das Krankenhausbett oder sonstige Gerät, an welchem die Rollen befestigt sind, aus der durch die Eingriffsausnehmungen vorgegebenen Bewegungsrichtung auszulenken sucht, kann das Teil 21 gegen die Kraft der Feder 25 nach unten ausweichen und die Eingriffsausnehmungen überlaufen, so dass die Rolle verschwenkt.

Insbesondere aus der Explosionsdarstellung gemäß Fig. 8 ist zu entnehmen, dass der Elektromotor 13 und damit auch das mit ihm verbundene Getriebe 14 durch eine Rastverbindung in der Aufnahmehülse12 gehalten sind. Hierzu ist ein Rastring 26 vorgesehen, der nach innen vorstehende Eingriffsnoppen 27 aufweist.

Diese Eingriffsnoppen 27 greifen durch Fenster 28 in der Aufnahmehülse 12 und weiter in Ausnehmungen 29 in dem Elektromotor 13 ein. Hierdurch ist der Elektromotor 13 in der Aufnahmehülse 12 gehaltert.

### BEZUGSZEICHENISTE

- 1: Lenkrolle
- 2: Rad
- 3: Rad
- 4: Gehäuse
- 5: Aufnahmeraum
- 6: Montageplatte
- 7: Lager
- 8: Lager
- 9: Lagerring
- 10: Lagerring
- 11: Befestigungshülse
- 12: Aufnahmehülse
- 13: Elektromotor
- 14: Getriebe
- 15: Antriebswelle
- 16: Aufnahmeöffnung
- 17: Gewindehülse
- 18: Fußteil
- 19: Boden
- 20: Aufsetzblech
- 21: Formschlussteil
- 22: Eingriffsringe
- 23: Aufnahmekörper
- 24: Langloch
- 25: Druckfeder
- 26: Rastring
- 27: Eingriffsnoppen
- 28: Fenster
- 29: Ausnehmungen

## Patentansprüche

1. Lenkrolle (1) mit einem Rollenkörper, einem Schwenklager (7, 8) und einem mittels eines Elektromotors ausfahrbaren Standfuß, wobei der Standfuß ein teleskopierbares Fußteil (18) aufweist, **dadurch gekennzeichnet, dass** der Elektromotor (13) unterhalb des Schwenklagers (7, 8), zumindest unterhalb eines ersten, oberen Lagers (7), angeordnet ist.

2. Lenkrolle nach Anspruch 1, **dadurch gekennzeichnet, dass** der Elektromotor (13) in einer in dem Rollenkörper befindlichen, unterhalb des Schwenklagers (7, 8) ausgebildeten Aufnahme (5) aufgenommen ist.

3. Lenkrolle nach einem der vorhergehenden Ansprüche, **dadurch gekennzeichnet, dass** vertikal unterhalb des Elektromotors (13) ein mit diesem zusammenwirkendes Getriebe (14) angeordnet ist.

4. Lenkrolle nach Anspruch 3, **dadurch gekennzeichnet, dass** das Getriebe (14) eine axial feststehende, jedoch relativ zu dem Getriebe drehbare Gewindehülse (17) aufweist.

5. Lenkrolle nach Anspruch 4, **dadurch gekennzeichnet, dass** die Gewindehülse (17) das Fußteil (18) verfährt.

6. Lenkrolle nach einem der Ansprüche 4 oder 5, **dadurch gekennzeichnet, dass** die Gewindehülse (17) innerhalb des Fußteils (18) angeordnet ist.

7. Lenkrolle nach einem der vorhergehenden Ansprüche, **dadurch gekennzeichnet, dass** das Fußteil (18) an einem Gehäuse (4) der Rolle, gegebenenfalls vermittels des Getriebes, drehgesichert ist.

8. Lenkrolle nach einem der vorhergehenden Ansprüche, **dadurch gekennzeichnet, dass** das Schwenklager (7, 8) aus zwei axial distanzierten Einzellagern (7, 8) besteht.

9. Lenkrolle nach einem der vorhergehenden Ansprüche, **dadurch gekennzeichnet, dass** ein Richtungsfeststeller (21) vorgesehen ist.

10. Lenkrolle nach Anspruch 9, **dadurch gekennzeichnet, dass** der Richtungsfeststeller (21) zwischen den Einzellagern (7, 8) vorgesehen ist.

## Claims

1. Swivel caster (1) with a caster body, a pivot bearing (7, 8) and a foot which can be extended by means of an electric motor, the foot having a telescopable foot part (18), **characterized in that** the electric motor (13) is located below the pivot bearing (7, 8), at least below a first, upper bearing (7).

2. Swivel caster according to Claim 1, **characterized in that** the electric motor (13) is accommodated in a receiver (5) which is in the caster body and is formed below the pivot bearing (7, 8).

3. Swivel caster according to one of the preceding claims, **characterized in that** a gearbox (14) that interacts with the electric motor (13) is located vertically below the electric motor.

4. Swivel caster according to Claim 3, **characterized in that** the gearbox (14) has an axially-fixed, threaded sleeve (17), which is however rotatable relative to the gearbox.

5. Swivel caster according to Claim 4, **characterized in that** the threaded sleeve (17) moves the foot part (18).

6. Swivel caster according to one of the preceding claims 4 or 5, **characterized in that** the threaded sleeve (17) is located within the foot part (18).

7. Swivel caster according to one of the preceding claims, **characterized in that** the foot part (18) is secured to the housing (4) of the caster, optionally by means of the gearbox, so that it cannot rotate relative to the housing.

8. Swivel caster according to one of the preceding claims, **characterized in that** the pivot bearing (7, 8) consists of two individual bearings (7, 8) which are axially spaced.

9. Swivel caster according to one of the preceding claims, **characterized in that** a direction detector (21) is provided.

10. Swivel caster according to Claim 9, **characterized in that** the direction detector (21) is provided between the individual bearings (7, 8).

## Revendications

1. Galet de direction (1) comportant un corps de roulement, un palier pivotant (7, 8) et un pied de support pouvant être déployé au moyen d'un moteur électrique, sachant que le pied de support présente une partie pied (18) télescopique, **caractérisé en ce que** le moteur électrique (13) est disposé sous le palier pivotant (7, 8), au moins sous un premier palier supérieur (7).

2. Galet de direction selon la revendication 1, **caractérisé en ce que** le moteur électrique (13) est logé dans un logement (5) se trouvant dans le corps de roulement, réalisé sous le palier pivotant (7, 8).

3. Galet de guidage selon l'une quelconque des revendications précédentes, **caractérisé en ce qu'**un engrenage (14) coopérant avec le moteur électrique (13) est disposé de manière verticale sous ce dernier.

4. Galet de direction selon la revendication 3, **caractérisé en ce que** l'engrenage (14) présente une douille filetée (17) immobile de manière axiale, pouvant toutefois tourner par rapport à l'engrenage.

5. Galet de direction selon la revendication 4, **caractérisé en ce que** la douille filetée (17) déplace la partie pied (18).

6. Galet de direction selon l'une quelconque des revendications 4 ou 5, **caractérisé en ce que** la douille filetée (17) est disposée à l'intérieur de la partie pied (18).

7. Galet de direction selon l'une quelconque des revendications précédentes, **caractérisé en ce que** la partie pied (18) est bloquée de manière à ne pas tourner sur un boîtier (4) du galet, éventuellement par l'entremise de l'engrenage.

8. Galet de direction selon l'une quelconque des revendications précédentes, **caractérisé en ce que** le palier pivotant (7, 8) est constitué de deux paliers individuels (7, 8) espacés axialement.

9. Galet de direction selon l'une quelconque des revendications précédentes, **caractérisé en ce qu'**un dispositif de blocage de direction (21) est prévu.

10. Galet de direction selon la revendication 9, **caractérisé en ce que** le dispositif de blocage de direction (21) est prévu entre les paliers individuels (7, 8).
